# FASCICULE DE BREVET EUROPEEN

(11) **EP 2 009 235 B1**
(45) Date de publication et mention de la délivrance du brevet: **07.04.2010**
(21) Numéro de dépôt: 08158877.4
(22) Date de dépôt: 24.06.2008
(51) Int. Cl.: F01D 5/08, F01D 5/30

(54) **Dispositif de refroidissement des alvéoles périphériques d'un disque de rotor de turbomachine à double alimentation en air**
Kühlvorrichtung für die äusseren Ausnehmungen einer Rotorscheibe einer Strömungsmaschine mit doppelter Luftzufuhr
Device for cooling the peripheral cavities of a turbomachine rotor disc with double air supply

(30) Priorité: 27.06.2007 FR 0756066
(43) Date de publication de la demande: 31.12.2008
(73) Titulaire: SNECMA, 75015 Paris (FR)
(72) Inventeur: Dejaune, Claude, Gérard, René, 77350 Boissise la Bertrand (FR); Gros, Valérie, Annie, 77166 Grisy Suisnes (FR); Loro, Gaël, 77380 Combs La Ville (FR); Soupizon, Jean-Luc, 77530 Vaux le Penil (FR)
(74) Mandataire: Boura, Olivier

(56) Documents cités:
- EP-A- 0 463 955
- EP-A- 1 264 964
- EP-A- 1 571 294
- FR-A- 2 164 197
- US-A- 5 232 339
- US-A- 5 478 207

## Description

### Arrière-plan de l'invention

La présente invention se rapporte au domaine général des disques de rotor de turbomachine munis à leur périphérie d'alvéoles dans lesquelles sont montées des pieds d'aubes. Elle vise plus précisément un dispositif permettant de refroidir efficacement ces alvéoles.

De façon connue en soi, les disques de rotor d'une turbomachine, tels que les disques des différents étages de la turbine basse-pression, comportent à leur périphérie une pluralité d'alvéoles sensiblement axiales dans lesquelles sont montées par emmanchement les pieds des aubes mobiles de la turbine.

Pendant le fonctionnement de la turbomachine, la veine d'écoulement de la turbine basse-pression dans laquelle sont disposées les aubes est traversée par des gaz dont la température est très élevée. Les alvéoles des disques qui reçoivent les pieds des aubes étant donc directement exposées à ces gaz, il est nécessaire de les refroidir pour éviter tout endommagement des disques.

A cet effet, il est connu de prélever une partie de l'air qui s'écoule en dehors de la veine d'écoulement de la turbine basse-pression pour l'acheminer via un circuit de refroidissement jusqu'aux alvéoles des disques de rotor. En pratique, chaque disque de rotor comporte une bride annulaire qui s'étend vers l'amont depuis la face radiale amont du disque et autour de laquelle est monté un flasque annulaire de maintien. La bride du disque et le flasque de maintien sont disposés de façon à ménager entre eux un espace annulaire formant une cavité de diffusion de l'air de refroidissement. Cette cavité de diffusion est alimentée en air de refroidissement à son extrémité amont par une pluralité d'orifices régulièrement répartis autour de l'axe de rotation du disque et débouche à son extrémité aval dans le fond de chacune des alvéoles du disque. L'air circulant en dehors de la veine d'écoulement de la turbine pénètre dans la cavité de diffusion de ce circuit de refroidissement par les orifices, se diffuse dans cette cavité puis vient ventiler les alvéoles du disque pour les refroidir, dans lequel sont divulgués toutes les caractéristiques du préambule de la revendication 1.

Ce type de circuit de refroidissement ne permet cependant pas d'obtenir un refroidissement parfaitement homogène pour toutes les alvéoles du disque de rotor, ce qui est néfaste au bon refroidissement du disque et donc à sa durée de vie. En effet, on comprend aisément qu'avec une telle configuration, les alvéoles qui sont disposées dans le prolongement direct des orifices d'alimentation en air du circuit de refroidissement sont nettement mieux refroidies que les alvéoles qui en sont le plus éloignées angulairement.

FR 2,164,197 décrit une ventilation des alvéoles du disque par des trous pratiqués dans le flasque de maintien et débouchant dans celles-ci.

### Objet et résumé de l'invention

La présente invention vise à remédier aux inconvénients précités en proposant un dispositif qui permet d'améliorer le refroidissement des alvéoles du disque de rotor afin d'accroître sa durée de vie.

Ce but est atteint grâce à un dispositif de refroidissement des alvéoles d'un disque de rotor de turbomachine, comportant :
un disque de rotor comprenant :
   à sa périphérie, une pluralité d'alvéoles sensiblement axiales qui sont régulièrement réparties autour de l'axe de rotation du disque et qui sont chacune destinées à recevoir le pied d'une aube, et
   une bride annulaire qui s'étend vers l'amont depuis une face radiale amont du disque ;
   un flasque annulaire de maintien comprenant une extrémité qui est montée contre la face radiale amont du disque et une bride annulaire qui s'étend vers l'amont depuis ladite face radiale amont du disque et qui est disposée autour de la bride du disque en ménageant avec celle-ci un espace annulaire formant une cavité de diffusion de l'air de refroidissement, cette cavité de diffusion débouchant à son extrémité aval dans le fond de chacune des alvéoles du disque à l'extrémité amont de celles-ci ; et
une pluralité d'orifices d'admission d'air régulièrement répartis autour de l'axe de rotation du disque et s'ouvrant dans la cavité de diffusion à l'extrémité amont de celle-ci ;
**caractérisé en ce que** l'extrémité du flasque de maintien qui est montée contre la face radiale amont du disque comprend une pluralité de lumières réparties autour de l'axe de rotation du disque, s'ouvrant dans la cavité de diffusion et alignées axialement avec le fond des alvéoles du disque.

Les alvéoles du disque sont ainsi alimentées par de l'air provenant à la fois des orifices d'admission d'air débouchant à l'extrémité amont de la cavité de diffusion et de l'air entrant par des lumières d'admission qui sont alignées axialement avec le fond des alvéoles du disque. Cette double alimentation des alvéoles du disque permet d'obtenir un refroidissement parfaitement homogène pour toutes les alvéoles du disque, ce qui contribue à augmenter la durée de vie du disque.

Selon une disposition avantageuse, l'extrémité du flasque de maintien qui est montée contre la face radiale amont du disque comprend en outre une pluralité de dents qui s'étendent radialement vers l'extérieur et qui sont chacune destinées à coopérer axialement avec une dent correspondante d'un pied d'une aube. La présence de ces dents permet d'assurer un maintien axial des aubes. En outre, de l'air vient également alimenter les alvéoles du disque par leur extrémité amont en passant entre deux dents adjacentes. Le refroidissement des alvéoles du disque s'en trouve renforcé.

L'invention a également pour objet une turbomachine comprenant au moins un dispositif de refroidissement des alvéoles d'un disque de rotor tel que défini précédemment.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 est une vue partielle et en coupe longitudinale d'une turbine basse-pression de turbomachine équipée d'un dispositif selon un mode de réalisation de l'invention ;
- la figure 2 est une vue en coupe selon II-II de la figure 1 ; et
- les figures 3A et 3B sont des vues par l'arrière du dispositif de la figure 1 montrant son montage.

### Description détaillée d'un mode de réalisation

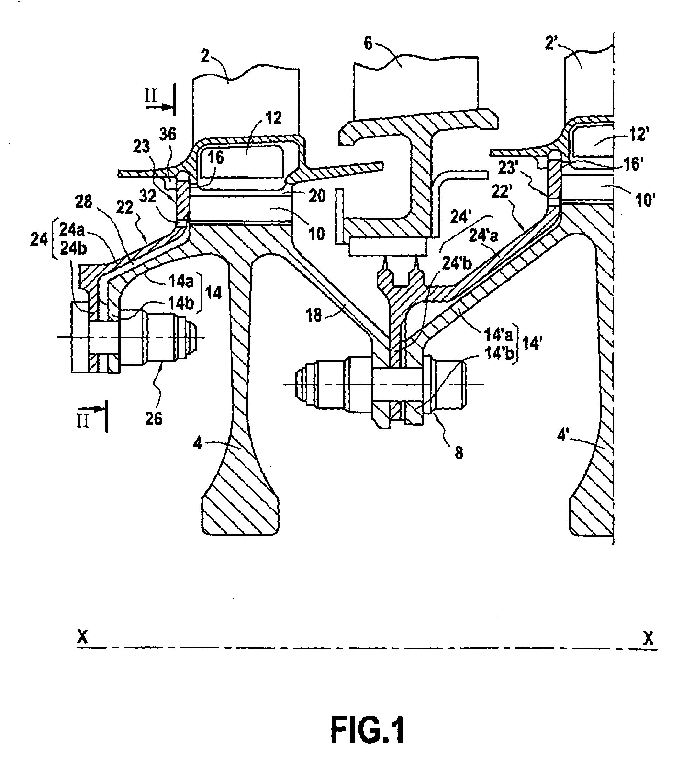

La figure 1 représente partiellement en coupe longitudinale une turbine basse-pression d'une turbomachine aéronautique équipée d'un dispositif selon un mode de réalisation de l'invention.

Bien entendu, la présente invention s'applique à tout autre ensemble de turbomachine (aéronautique ou terrestre) muni d'un disque de rotor ayant des alvéoles dans lesquelles sont montées axialement des pieds d'aubes.

La figure 1 représente plus précisément le premier étage et le deuxième étage de la turbine basse-pression. Le premier étage se compose d'une roue mobile formée d'une pluralité d'aubes mobiles 2 montées axialement sur un disque de rotor 4. Le deuxième étage se compose quant à lui d'un distributeur formé d'une pluralité d'aubes fixes 6 et d'une roue mobile placée derrière le distributeur et formée d'une pluralité d'aubes mobiles 2' montées axialement sur un disque de rotor 4'.

Les disques de rotor 4, 4' du premier et du deuxième étage de la turbine sont centrés sur l'axe longitudinal X-X de la turbomachine et sont fixés l'un à l'autre au moyen de liaisons boulonnées 8 régulièrement réparties autour de cet axe X-X.

Chaque disque 4, 4' comporte à sa périphérie une pluralité d'alvéoles 10, 10' sensiblement axiales, ouvertes vers l'extérieur du disque et régulièrement réparties autour de l'axe de rotation des disques (cet axe de rotation est confondu avec l'axe longitudinal X-X de la turbomachine). Les alvéoles sont destinées à recevoir chacune axialement le pied 12, 12' (par exemple en forme de sapin) d'une aube mobile 2, 2' (par exemple par emmanchement).

Chaque disque 4, 4' comporte en outre une bride annulaire 14, 14' qui s'étend axialement vers l'amont depuis la face radiale amont 16, 16' du disque. Cette bride 14, 14' se compose d'une partie annulaire 14a, 14'a sensiblement axiale se prolongeant par une partie annulaire 14b, 14'b sensiblement radiale (ci-après appelée extrémité amont de la bride du disque).

Le disque 4 du premier étage de la turbine comporte également une bride annulaire 18 qui s'étend axialement vers l'aval depuis la face radiale aval 20 du disque. Cette bride 18 sert à la fixation du disque 4 sur le disque 4' du deuxième étage par l'intermédiaire des liaisons boulonnées 8 comme indiqué précédemment.

Un flasque annulaire de maintien 22, 22' est monté contre la face radiale amont 16, 16' de chaque disque 4, 4'. De façon plus précise, chaque flasque de maintien 22, 22' comprend une extrémité aval 23, 23' sensiblement radiale qui est montée contre la face radiale amont 16, 16' du disque et une bride annulaire 24, 24' qui s'étend axialement vers l'amont et qui est disposée autour de la bride correspondante 14, 14' du disque.

En outre, la bride 24, 24' du flasque de maintien se compose d'une partie annulaire 24a, 24'a sensiblement axiale se prolongeant vers l'aval par l'extrémité 23, 23' et vers l'amont par une partie annulaire 24c, 24'c sensiblement radiale (ci-après appelée extrémité amont de la bride du flasque).

Le flasque de maintien 22 du premier étage de la turbine est fixé sur la bride 14 du disque 4 au moyen de liaisons boulonnées 26 serrant leur extrémité amont respective 24b, 14b. Quant au flasque de maintien 22' du deuxième étage, il est fixé sur la bride 14' du disque 4' au moyen des liaisons boulonnées 8 de fixation des disques 4, 4'.

Pour des raisons de commodité, on décrira seulement le circuit destiné au refroidissement des alvéoles 10 du disque 4 du premier étage de la turbine. Bien entendu, le circuit de refroidissement des alvéoles 10' du disque 4' du deuxième étage de la turbine est parfaitement analogue à celui du premier étage.

La bride 24 du flasque de maintien 22 est disposée autour de la bride 14 du disque de façon à ménager avec celle-ci un espace annulaire 28 formant une cavité de diffusion de l'air de refroidissement. Cette cavité de diffusion 28 est essentiellement formée entre les parties axiales 24a, 14a des brides respectives 24, 14 du flasque de maintien et du disque.

La cavité de diffusion 28 débouche à son extrémité aval dans le fond de chacune des alvéoles 10 du disque 4 à l'extrémité amont de celles-ci. A son extrémité amont, la cavité de diffusion est fermée par serrage des liaisons boulonnées 26 entre les extrémités amont 24b, 14b des brides respectives 24, 14 du flasque de maintien et du disque.

Par ailleurs, la cavité de diffusion 28 est alimentée par une pluralité d'orifices d'admission d'air 30 qui sont régulièrement répartis autour de l'axe longitudinal X-X et qui s'ouvrent dans la cavité de diffusion à l'extrémité amont de celle-ci.

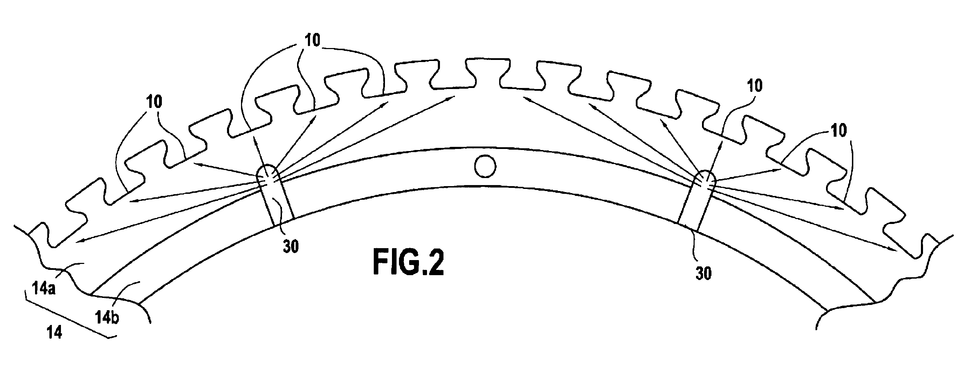

Sur l'exemple de réalisation de la figure 2, ces orifices d'admission d'air 30 sont formés par usinage selon une direction sensiblement radiale de l'extrémité amont 14b de la bride 14 du disque 4. Bien entendu, ces orifices pourraient tout aussi bien être obtenus par usinage de l'extrémité amont 24b de la bride 24 du flasque de maintien 22.

Par ailleurs, le nombre d'orifices d'admission d'air 30 sur l'ensemble du disque est variable. Ainsi, dans l'exemple de la figure 2, l'espacement angulaire entre deux orifices d'admission d'air 30 adjacents correspond à environ huit alvéoles du disque. Ainsi, chaque orifice 30 fournit de l'air de refroidissement à environ sept alvéoles.

Selon l'invention, l'extrémité aval 23 du flasque de maintien 22 qui est montée contre la face radiale amont 16 du disque 4 comprend une pluralité de lumières 32 (ou ouvertures) réparties autour de l'axe de rotation du disque, s'ouvrant dans la cavité de diffusion et alignées axialement avec le fond de chacune des alvéoles 10 du disque.

Plus précisément, l'extrémité aval 23 du flasque de maintien 22 comprend autant de lumières 32 qu'il y a d'alvéoles 10 à la périphérie du disque. Ces lumières sont alignées axialement avec le fond des alvéoles.

Ainsi, chaque alvéole 10 du disque est alimentée en air de refroidissement par deux sources différentes : d'une part par de l'air issu de la cavité de diffusion 28 et d'autre part par de l'air entrant par les lumières 32 pratiquées dans l'extrémité aval 23 du flasque de maintien. Le refroidissement des alvéoles du disque peut donc être rendu homogène sur l'ensemble du disque.

Selon une caractéristique avantageuse de l'invention, l'extrémité aval 23 du flasque de maintien 22 qui est montée contre la face radiale amont 16 du disque comprend en outre une pluralité de dents 34 (ou créneaux) qui s'étendent radialement vers l'extérieur.

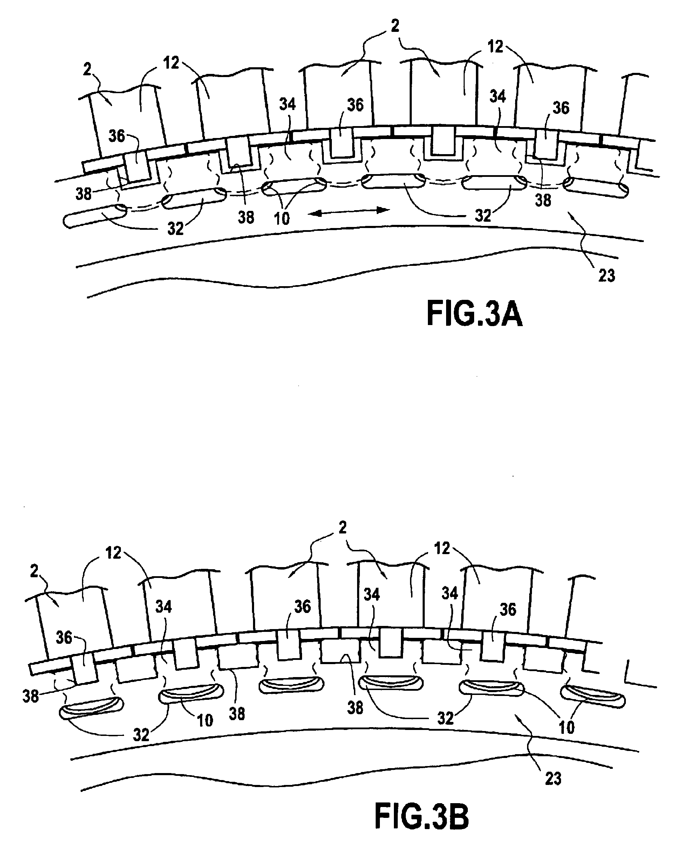

Comme représenté sur les figures 3A et 3B, chacune de ces dents 34 est destinée à coopérer axialement avec une dent (ou becquet) 36 correspondante d'un pied 12 d'une aube 2 mobile de la turbine. En outre, les dents 34 du flasque de maintien délimitent entre elles une pluralité d'échancrures 38 dimensionnées pour permettre le passage des dents 36 des pieds d'aubes.

La présence des dents 34 du flasque de maintien 22 permet ainsi d'assurer un maintien axial des aubes. Par ailleurs, de l'air vient également alimenter les alvéoles 10 du disque par leur extrémité amont en passant entre deux dents adjacentes 34, c'est-à-dire au niveau des échancrures 38. Le refroidissement des alvéoles du disque s'en trouve donc renforcé.

Les figures 3A et 3B illustrent le montage du flasque de maintien 22 contre la face radiale amont du disque. Sur la figure 3A, le flasque est amené contre cette face radiale amont en alignant axialement les échancrures 38 de l'extrémité aval 23 du disque avec les dents 36 des pieds d'aubes. Le flasque de maintien est ensuite pivoté autour de l'axe longitudinal de la turbomachine jusqu'à ce que ses dents 34 viennent en contact axial avec les dents correspondantes 36 des pieds d'aubes comme représenté à la figure 3B, assurant ainsi un maintien axial des aubes dans les alvéoles du disque. Les liaisons boulonnées 26 entre les extrémités amont des brides respectives du flasque de maintien et du disque sont alors serrées pour assurer une fixation et une anti-rotation du flasque de maintien.

## Revendications

1. Dispositif de refroidissement des alvéoles d'un disque de rotor de turbomachine, comportant :
un disque de rotor (4) comprenant :
à sa périphérie, une pluralité d'alvéoles (10) sensiblement axiales qui sont régulièrement réparties autour de l'axe de rotation (X-X) du disque et qui sont chacune destinées à recevoir le pied (12) d'une aube (2), et
une bride annulaire (14) qui s'étend vers l'amont depuis une face radiale amont (16) du disque ;
un flasque annulaire de maintien (22) comprenant une extrémité (23) qui est montée contre la face radiale amont (16) du disque et une bride annulaire (24) qui s'étend vers l'amont depuis ladite face radiale amont du disque et qui est disposée autour de la bride (14) du disque en ménageant avec celle-ci un espace annulaire (28) formant une cavité de diffusion de l'air de refroidissement, cette cavité de diffusion débouchant à son extrémité aval dans le fond de chacune des alvéoles du disque à l'extrémité amont de celles-ci ; et
une pluralité d'orifices d'admission d'air (30) régulièrement répartis autour de l'axe de rotation du disque et s'ouvrant dans la cavité de diffusion à l'extrémité amont de celle-ci ;
**caractérisé en ce que** l'extrémité (23) du flasque de maintien (22) qui est montée contre la face radiale amont (16) du disque (4) comprend une pluralité de lumières (32) réparties autour de l'axe de rotation du disque, s'ouvrant dans la cavité de diffusion et alignées axialement avec le fond des alvéoles (10) du disque.

2. Dispositif selon la revendication 1, dans lequel l'extrémité (23) du flasque de maintien (22) qui est montée contre la face radiale amont (16) du disque (4) comprend en outre une pluralité de dents (34) qui s'étendent radialement vers l'extérieur et qui sont chacune destinées à coopérer axialement avec une dent (36) correspondante d'un pied (12) d'une aube (2) afin d'assurer un maintien axial desdites aubes.

3. Turbomachine **caractérisée en ce qu'**elle comporte au moins un dispositif de refroidissement des alvéoles d'un disque de rotor selon l'une des revendications 1 et 2.

## Claims

1. A device for cooling the slots in a turbomachine rotor disk, the device comprising:
a rotor disk (4) comprising:
at its periphery, a plurality of substantially axial slots (10) that are regularly distributed around the axis of rotation (X-X) of the disk and that are each intended to receive the root (12) of a blade (2); and
an annular flange (14) extending upstream from an upstream radial face (16) of the disk;
a retaining annulus (22) having an end (23) that is mounted against the upstream radial face (16) of the disk and an annular flange (24) that extends upstream from said upstream radial face of the disk and that is placed around the flange (14) of the disk, while cooperating therewith to leave an annular space (28) forming a cooling air diffusion cavity, this diffusion cavity opening out at its downstream end into the bottom of each of the disk slots, at the upstream ends thereof; and
a plurality of air admission orifices (30) regularly distributed around the axis of rotation of the disk and opening out into the diffusion cavity at the upstream end thereof;
the device being **characterized in that** the end (23) of the retaining annulus (22) that is mounted against the upstream radial face (16) of the disk (4) includes a plurality of openings (32) distributed around the axis of rotation of the disk, opening out into the diffusion cavity and each axially aligned with the bottom of the slots (10) in the disk.

2. A device according to claim 1, in which the end (23) of the retaining annulus (22) that is mounted against the upstream radial face (16) of the disk (4) further includes a plurality of teeth (34) extending radially outwards, each of which is designed to co-operate axially with a corresponding tooth (36) of a blade root (12) in order to retain said blades axially.

3. A turbomachine, **characterized in that** it includes at least one device for cooling slots in a rotor disk, and in accordance with claim 1 or claim 2.

## Patentansprüche

1. Vorrichtung zum Kühlen der Mulden einer Rotorscheibe einer Turbomaschine, die folgendes umfaßt:
eine Rotorscheibe (4), die folgendes aufweist:
an ihrem Umfang eine Vielzahl von im wesentlichen axialen Mulden (10), die um die Drehachse (X-X) der Scheibe gleichmäßig verteilt sind und die jeweils dazu bestimmt sind, den Fuß (12) einer Schaufel (2) aufzunehmen, und
einen Ringflansch (14), der von einer stromaufwärtigen radialen Fläche (16) der Scheibe aus stromaufwärts verläuft,
einen ringförmigen Halteflansch (22), der ein Ende (23), das an der stromaufwärtigen radialen Fläche (16) der Scheibe angebracht ist, sowie einen Ringflansch (24) umfaßt, der von der stromaufwärtigen radialen Fläche der Scheibe aus stromaufwärts verläuft und der um den Flansch (14) der Scheibe angeordnet ist und dabei mit diesem einen ringförmigen Raum (28) ausbildet, der einen Hohlraum für die Verteilung der Kühlluft bildet, wobei dieser Verteilungshohlraum an seinem stromabwärtigen Ende in den Boden einer jeden der Mulden der Scheibe, an deren stromaufwärtigen Ende mündet, sowie
eine Vielzahl von Luftzuführöffnungen (30), die um die Drehachse der Scheibe gleichmäßig verteilt sind und die sich in den Verteilungshohlraum an dessen stromaufwärtigen Ende öffnen,
**dadurch gekennzeichnet, daß** das Ende (23) des Halteflansches (22), das an der stromaufwärtigen radialen Fläche (16) der Scheibe (4) angebracht ist, eine Vielzahl von Öffnungen (32) aufweist, die um die Drehachse der Scheibe verteilt sind, sich in den Verteilungshohlraum öffnen und mit dem Boden der Mulden (10) der Scheibe axial fluchten.

2. Vorrichtung nach Anspruch 1, wobei das Ende (23) des Halteflansches (22), das an der stromaufwärtigen radialen Fläche (16) der Scheibe (4) angebracht ist, ferner eine Vielzahl von Zähnen (34) umfaßt, die sich radial nach außen erstrecken und die jeweils dazu bestimmt sind, mit einem entsprechenden Zahn (36) eines Fußes (12) einer Schaufel (2) axial zusammenzuwirken, um einen axialen Halt der Schaufeln zu gewährleisten.

3. Turbomaschine, **dadurch gekennzeichnet, daß** sie wenigstens eine Vorrichtung zum Kühlen der Mulden einer Rotorscheibe nach einem der Ansprüche 1 und 2 umfaßt.
